# FASCICULE DE BREVET EUROPEEN

(11) **EP 0 786 301 B1**
(45) Date de publication et mention de la délivrance du brevet: **28.07.1999**
(21) Numéro de dépôt: 97400121.6
(22) Date de dépôt: 21.01.1997
(51) Int. Cl.: B23C 3/12

(54) **Instrument à main non motorisé pour l'usinage de pièces notamment de pièces métalliques**
Handwerkzeug zum Bearbeiten von Werkstücken, insbesondere Metallwerkstücken
Handtool for working pieces, especially metal pieces

(30) Priorité: 24.01.1996 FR 9600785
(43) Date de publication de la demande: 30.07.1997
(73) Titulaire: Carossino, Patricia, 78430 Louveciennes (FR)
(72) Inventeur: Carossino, André, 78430 Louveciennes (FR)

(56) Documents cités:
- EP-A- 0 610 732
- CH-A- 662 089
- DE-A- 3 338 285
- DE-A- 3 929 733
- DE-A- 4 113 543
- DE-U- 8 526 397
- FR-A- 2 443 306
- FR-A- 2 702 688

## Description

L'invention concerne un instrument à main selon le préambule de la revendication 1; voir par exemple DE-U 85 26 397.4.

On connaît déjà de multiples instruments à main pour l'usinage des angles vifs, de pièces de bois, de métal ou de pierre. Le plus souvent ces instruments sont constitués d'un outil tournant, tel que fraise, entraîné en rotation par un flexible et un moteur électrique ou en bout de moteur électrique ou turbine pneumatique.

Ces instruments sont peu ou pas opérationnels pour deux raisons essentielles :
- d'une part la pénétration de l'outil dans la matière est aléatoire car elle est laissée à la dextérité de l'opérateur ;
- d'autre part, l'outil étant apparent et tournant à grande vitesse(12000 tours), le risque de casse ou d'éclatement de l'outil est fréquent en raison des tressautements dus au contact mal maîtrisé de la partie coupante de l'outil sur la pièce à usiner, ce qui constitue un réel danger.

Du point de vue économique, ces instruments sont peu rentables car les chanfreins ou rayons souhaités devant être précis et de grande régularité et l'intervention manuelle étant par nature hasardeuse, l'usinage n'est ni fiable ni régulier, ce qui implique des retouches successives pour tenter de rattraper les irrégularités commises.

Certains opérateurs ont tenté de pallier ces inconvénients en utilisant un guide fixe en forme de cornière pourvu d'une entaille au niveau de son arête à travers laquelle la partie coupante de l'outil attaque l'angle de la pièce que l'on fait glisser progressivement sur ce guide. Ce type d'outillage permet de mieux contrôler l'enlèvement de matière, mais l'outil tournant reste apparent avec les dangers énoncés précédemment et, de surcroît, il s'agit de postes fixes qui ne peuvent recevoir que des pièces profilées et rectilignes capables de glisser sur le guide-cornière. Il est inconcevable avec de tels dispositifs d'opérer des arasements ou des chanfreins sur des pièces circulaires ou sur des parties concaves ou convexes et encore moins d'opérer directement sur le site.

II existe par ailleurs des plans de travail sur lesquels émergent des fraises coniques dont les profondeurs de coupe sont pilotées par un roulement prenant appui sur un des côtés de la pièce à chanfreiner ou à ébavurer. Les parties concaves ou convexes d'une pièce peuvent être travaillées pourvu que tous ses angles se trouvent sur un même plan. Par ailleurs, ces dispositifs sont des postes fixes et ne peuvent être utilisés sur le site.

L'invention répond à ces inconvénients et concerne à cet effet un Instrument à main pour l'usinage de pièces notamment de pièces métalliques, notamment pour l'arasement d'angles, la réalisation de chanfreins ou de rayons sur des pièces métalliques, du type constitué d'un outil tel qu'une fraise cylindrique comportant une queue destinée à être fixée sur un organe moteur indépendant, la partie active dudit outil étant logée dans un fourreau-guide, fixe en rotation, pourvu d'au moins une lumière débouchant au droit de cette partie active de l'outil et dont les bords inclinés convergent vers cette partie active en formant des portées de guidage et d'appui sur la pièce à usiner, ce fourreau-guide étant fixé sur un corps de palier, caractérisé en ce que le corps de palier renferme deux roulements, concentriques à la queue de l'outil et une entretoise cylindrique ajustée sur la queue de l'outil, solidaire en rotation de la queue et située entre les deux roulements dont la cage intérieure est solidaire en rotation de la queue de l'outil.

Selon un mode de réalisation de l'invention, l'entretoise comporte des ergots d'entraînement en saillie sur ses deux faces frontales et en prise avec les cages intérieures des roulements.

Selon un autre mode de réalisation de l'invention, l'entretoise comporte des épaulements cylindriques coaxiaux à la queue de la fraise et servant de portées aux cages intérieures des deux roulements.

D'autres caractéristiques et avantages ressortiront de la description ci-après et des dessins annexés dans lesquels :
- la figure 1 est une vue en coupe axiale de l'instrument à main conforme à l'invention, selon un premier mode de réalisation ;
- la figure 2 est une vue agrandie montrant la forme progressive de la lumière du fourreau-guide ;
- la figure 3 est une vue en coupe axiale, selon un second mode de réalisation ;

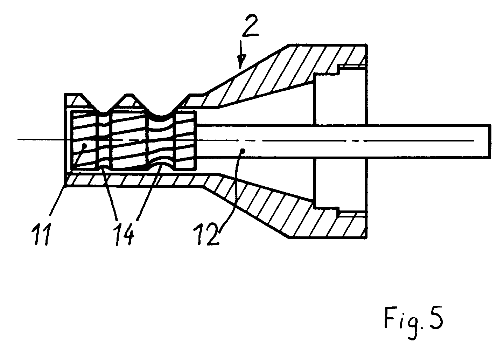

- la figure 4 est une vue de détail de la lumière,
- la figure 5 est une vue en coupe axiale du fourreau-guide et de son outil associé ; 1
- la figure 6 est une vue schématique illustrant l'outil en position d'usinage sur l'angle d'une pièce.

Le but essentiel de l'invention est de maîtriser la pénétration de l'outil dans la matière tout en évitant les risques inhérents à l'éclatement de l'outil en cours d'usinage.

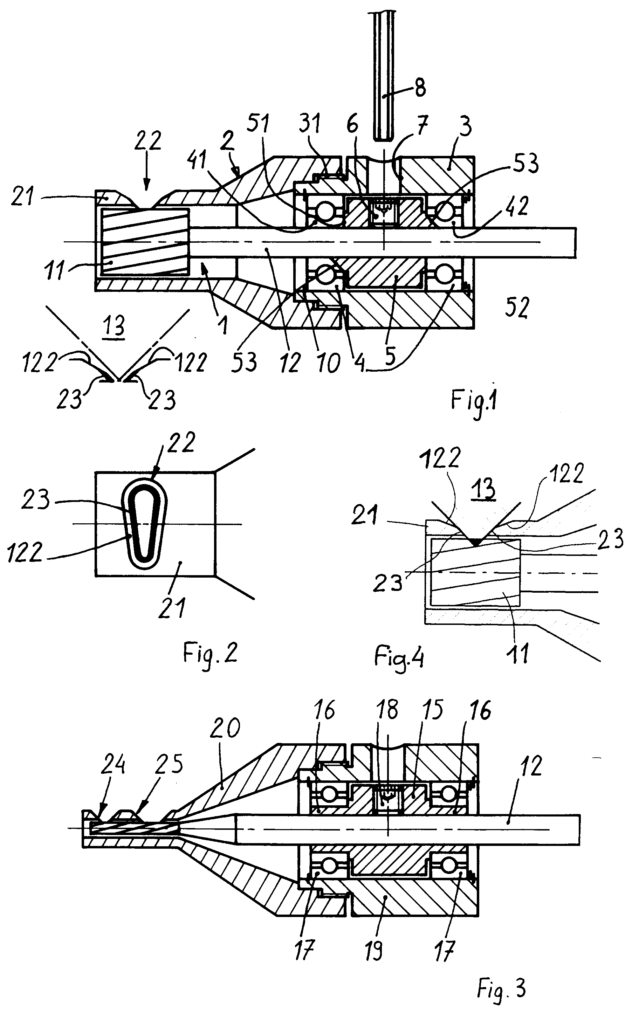

Pour ce faire et selon le premier mode de réalisation illustré en figure 1, l'outil, (ici une fraise cylindrique 1), est logé à l'intérieur d'un fourreau-guide 2, sa denture 11 étant totalement masquée de l'extérieur par un nez 21 prolongeant ce fourreau-guide. La queue 12 de l'outil est accouplée à un organe d'entraînement tel qu'un moteur électrique (non représenté) et est logée dans un corps de palier 3 renfermant deux roulements 4, concentriques à la queue de l'outil 12 et formant un palier supportant la queue de l'outil pour éviter que l'outil ne tourne en porte à faux et n'accuse un défaut d'excentricité au cours de sa rotation. Ces roulements sont espacés l'un de l'autre par une entretoise cylindrique 5, ajustée sur la queue de l'outil et solidaire en rotation de la queue 12 de l'outil. Chaque face frontale 51 et 52 de cette entretoise comporte, de façon alternée, un ergot 53 qui fait saillie vers l'extérieur et qui vient se loger dans un évidement correspondant des cages intérieures 41 et 42 des deux roulements 4. L'entretoise 5 est rendue solidaire en rotation de la queue 12 de l'outil par une vis 6 logée dans un orifice taraudé de cette entretoise, venant en butée sur la périphérie de la queue 12 de l'outil. Le corps de palier 3 comporte un orifice 7 pour le passage de la vis et de la clé de serrage 8.

Ainsi la queue 12 de l'outil entraîne en rotation l'entretoise 5, laquelle entraîne à son tour par ses deux ergots 53 les cages intérieures 41 et 42 des roulements 4. Le corps de palier 3 reste en revanche fixe en rotation et les deux roulements 4 sont immobilisés axialement dans un corps de palier par une rondelle élastique 9 et deux circlips 10, placés de part et d'autre des deux roulements 4.

Le corps de palier 3 comporte une partie filetée 31 sur laquelle est vissé le fourreau-guide 2 se présentant sous la forme d'un embout cylindrique prolongé par le nez 21. Ce nez comporte au moins une lumière 22 située au droit de la denture 11 de l'outil, et cette lumière comporte avantageusement des bords inclinés 23 convergeant vers cette denture et servant de portée ou d'appui pour la pièce à usiner, schématisée en 13. Ces bords inclinés 23 servent en effet à maîtriser la profondeur de pénétration de la pièce à l'intérieur du fourreau-guide 2. Ces portées sont prolongées par un évasement 122 limitant la largeur des portées 23 pour faire mieux coïncider le fourreau-guide avec la pièce à usiner.

Comme visible en figure 2, la lumière 22 peut être semi-circulaire, c'est-à-dire qu'elle s'étend sur une demie circonférence de la section du nez, et avoir une forme progressive pour obtenir des chanfreins de tailles différentes. Dans ce cas, il suffit de positionner la pièce à usiner 13 en regard de la partie de la lumière choisie selon la largeur du chanfrein ou du rayon à réaliser. Cette forme de lumière favorise par ailleurs l'expulsion des copeaux ou de la limaille au cours de l'opération d'usinage. On peut, si nécessaire, prévoir sur le même fourreau-guide deux ou plus d'encoches ou de lumières de formes et de largeurs différentes avec des portées d'orientation variables selon l'angle du chanfrein à réaliser.

La partie coupante de l'outil doit préférablement avoir une denture avec une coupe à droite et une hélice à gauche ou une coupe à gauche pour rotation à gauche avec une hélice à droite. Cette disposition favorise le dégagement des copeaux vers l'extérieur de la chambre intérieure du guide de façon à protéger les roulements des copeaux ou limaille d'usinage.

Selon un second mode de réalisation tel que visible en figure 3, la queue 12 de l'outil est portée par une entretoise 15 comportant sur ses deux faces latérales des épaulements cylindriques 16, coaxiaux à la queue de l'outil et servant de portées à deux roulements 17. Là encore l'entretoise 16 est calée sur la queue de l'outil 12 par une vis 18 accessible de l'extérieur du corps de palier 19. Le fourreau-guide 20 est vissé sur la partie filetée du corps de palier 19 et comporte ici deux lumières 24 de largeurs et d'inclinaisons différentes. Ici la fraise 25 est d'un diamètre plus petit que le diamètre intérieur des roulements des paliers 17.

L'instrument à main selon l'invention peut être utilisé sur tout dispositif tournant tel que perceuse à main, broche pneumatique, mandrin, pince à entraînement par flexible, moteur électrique avec pinces, etc. ...

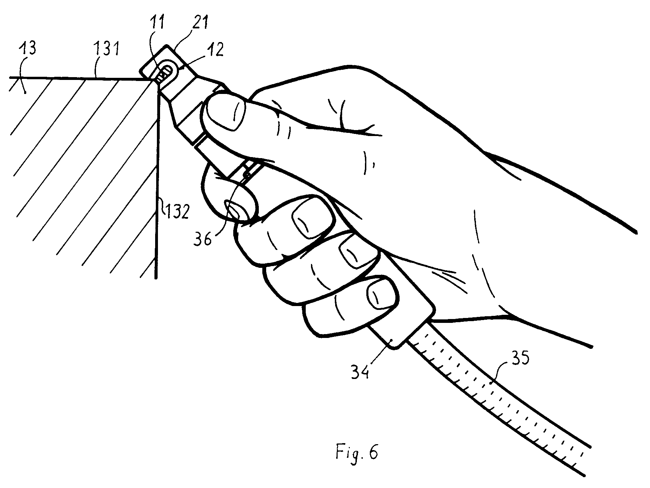

Comme visible en figure 6, l'instrument selon l'invention est fixé sur un porte-pinces 34 prolongeant le flexible 35 renfermant l'arbre tournant, par une pince classique 36 à mâchoires radiales comportant des méplats de serrage. La figure 6 montre comment s'effectue la préhension de l'outil et illustre en particulier sa facilité d'utilisation, la main saisissant le porte-pinces 34 tandis que le pouce et l'index tiennent le corps de palier et le fourreau-guide, fixes en rotation. L'outil est présenté incliné sur l'angle vif de la pièce à usiner 13 de manière à ce que ses deux arêtes orthogonales 131,132 viennent en appui sur les bords inclinés 23 de la lumière 22 maîtrisant ainsi la profondeur de pénétration de la pièce à l'intérieur du fourreau-guide, en direction de la denture de l'outil 11.

Ainsi, l'outil est, dans tous les cas, masqué à l'intérieur du fourreau-guide ce qui réduit très sensiblement les risques de casse ou d'éclatement de l'outil puisque l'enlèvement de matière se fait progressivement sans à-coup et sans tressautement. En outre, en cas de casse inopinée de cet outil, les dangers corporels sont pratiquement réduits à néant. Enfin, la pénétration de l'outil dans la matière se fait progressivement dès l'instant où la pièce à usiner entre en contact avec le fourreau-guide, ce qui permet de réaliser des usinages réguliers et contrôlés.

## Revendications

1. Instrument à main pour l'usinage de pièces notamment de pièces métalliques, notamment pour l'arasement d'angles, la réalisation de chanfreins ou de rayons sur des pièces métalliques (13), du type constitué d'un outil tel qu'une fraise cylindrique (1) comportant une queue (12) destinée à être fixée sur un organe moteur indépendant (34-36), la partie active (11) dudit outil (1) étant logée dans un fourreau-guide (2), fixe en rotation, pourvu d'au moins une lumière (22) débouchant au droit de cette partie active (11) de l'outil et dont les bords inclinés (23) convergent vers cette partie active (11) en formant des portées de guidage et d'appui (23) sur la pièce à usiner (13), ce fourreau-guide étant fixé sur un corps de palier (3), caractérisé en ce que le corps de palier (3; 19) renferme deux roulements (4), concentriques à la queue (12) de l'outil (1) et une entretoise cylindrique (5; 15) ajustée sur la queue (12) de l'outil, solidaire en rotation de la queue (12) et située entre les deux roulements (4) dont la cage intérieure (41, 42) est solidaire en rotation de la queue (12) de l'outil (1).

2. Instrument à main selon la revendication 1, caractérisé en ce que l'entretoise (5) comporte des ergots d'entraînement (53) en saillie sur ses deux faces frontales et en prise avec les cages intérieures (41, 42) des roulements (4).

3. Instrument à main selon la revendication 1, caractérisé en ce que l'entretoise (15) comporte des épaulements cylindriques (16) coaxiaux à la queue de la fraise (12) et servant de portées aux cages intérieures des deux roulements (17).

4. Instrument à main selon l'une quelconque des revendications 1 à 3, caractérisé en ce que les roulements (4) sont des roulements à billes, immobilisés axialement par des circlips (10) avec interposition de rondelles élastiques (9) de rattrapage de jeu.

5. Instrument à main selon l'une quelconque des revendications 1 à 4, caractérisé en ce que l'entretoise (5; 15) comporte un orifice taraudé pour la réception d'une vis de blocage (6) venant en butée sur la périphérie de la queue (12) de la fraise (1) et en ce que le corps de palier (3; 19) comporte un orifice (7) d'accès à la vis de blocage (6) de l'entretoise (5; 15).

6. Instrument à main selon la revendication 1 caractérisé en ce que le fourreau-guide (2) est formé d'un embout fixé de manière amovible sur le corps de palier (3; 19) prolongé par un nez (21) enveloppant la partie coupante (11) de l'outil (1).

7. Instrument à main selon la revendication 6, caractérisé en ce que le nez (21) du fourreau-guide (2) comporte une lumière (22) pourvue de portées (23) inclinées à 45 vers l'intérieur du fourreau-guide (2).

8. Instrument à main selon les revendications 1 et 6, caractérisé en ce que le nez (24) comporte deux lumières espacées (14) de largeurs différentes.

9. Instrument à main selon l'une des revendication 1, 6, 7 ou 8, caractérisé en ce que la forme de la ou des lumières (22) est de largeur progressive.

10. Instrument à main selon l'une quelconque des revendications 7 à 9, caractérisé en ce que les portées (23) sont prolongées vers l'extérieur par un évasement (122).

## Claims

1. Hand-tool for the machining of pieces, in particular of metal pieces, especially for the erasing of angles, the achievement of chamfers or rounds on metal pieces (13), of the type comprising a tool, such as a cylindrical milling cutter (1), comprising a tail end (12) that can be fastened on an separate driving unit (34-36), wherein the working part (11) of said tool (1) is located in a guiding sleeve (2) that is locked in rotation and provided with an aperture (22) that opens at right angles with this working part (11) of the tool and the slanting edges (23) of which are converging towards this working part (11) and are forming guiding and support rest surfaces (23) for the piece to be machined, wherein the guiding sleeve is fixed on a bearing body (3), characterised in that the bearing body (3, 19) contains two rolling bearings (4) that are concentric with the tail end (12) of the tool (1) and a cylindrical distance piece (5 ; 15) that is fitted on the tail end (12) of the tool, that is rotating with the tail end (12) and that is disposed between both rolling bearings (4) the internal race (41, 42) of which is rotating with the tail end (12) of the tool (1).

2. Hand-tool according to claim 1, characterised in that the distance piece (5) comprises driving pins (53) that are protruding from both front faces of the distance piece (5) and are engaged with the internal races (41, 42) of the rolling bearings (4).

3. Hand-tool according to claim 1, characterised in that the distance piece (5 ; 15) comprises cylindrical shoulders (16) that are coaxial with the tail end (12) of the milling cutter and are used as thrusts for the internal races of both rolling bearings (17).

4. Hand-tool according to anyone of claims 1 to 3, characterised in that the rolling bearings (4) are ball bearings that are axially locked by circlips (10) with interleaving elastic rings for taking of the play.

5. Hand-tool according to anyone of claims 1 to 4, characterised in that the distance piece (5, 15) comprises a threaded hole for receiving a locking screw (6) that is abutting on the periphery of the tail end (12) of the milling cutter (1)and in that the bearing body (3 ; 19) comprises an opening (7) giving access to the locking screw (6) of the distance piece (5 ; 15).

6. Hand-tool according to claim 1, characterised in that the guiding sleeve (2) consists of a nipple that is removably fixed on the bearing body (3 ; 19) and prolonged by a nose (21) that is wrapping the cutting part (11) of the tool (1).

7. Hand-tool according to claim 6, characterised in that the nose (21) of the guiding sleeve (2) comprises an aperture (22) provided with rest surfaces (23) that are inclined at 45 ° towards the interior of the guiding sleeve (2).

8. Hand-tool according to claims 1 and 6, characterised in that the nose (21) comprises two spaced apertures (14) of different widths.

9. Hand-tool according to anyone of claims 1, 6, 7 or 8, characterised in that the shape of the aperture(s) (22) has a progressive width.

10. Hand-tool according to anyone of claims 7 to 9, characterised in that the rest surfaces (23) are prolonged towards the outside by a widening part (122).

## Patentansprüche

1. Handwerkzeug für die Bearbeitung von Werkstücken, insbesondere von Metallwerkstücken, insbesondere zum Verschleifen von Kanten oder für die Verwirklichung von Schrägkanten oder Rundungen auf Metallwerkstücken (13), bestehend aus einem Werkzeug, wie einem zylindrischen Fräser (1), mit einem Stiel (12), der an einem getrennten Antrieb (34-36) befestigbar ist, wobei das wirkende Teil (11) des Werkzeugs (1) in einer Führungshülle (2) untergebracht ist, die drehfest ist und eine Ôeffnung (22) aufweist, die vor dem wirkenden Teil (11) mündet und deren schrägen Rände (23) auf dieses wirkenden Teil (11) hin verlaufen und Führungs- und Stützungs-flächen (23) für das zubearbeitende Werkstück (13) bilden, wobei die Führungshülle an einem Lagerkörper (3) befestigt ist, dadurch gekennzeichnet, dass der Lagerkörper (3 ; 19) zwei mit dem Stiel (12) des Werkzeugs (1) konzentrischen Rolllager (4) und ein Distanzstück (5, 15) enthält, das auf dem Stiel (12) des Werkzeugs angefestigt ist, mit dem Stiel (12) mitlaüft und zwischen den beiden Rolllager (4) untergebracht ist, deren Innengehaüse (41, 42) mit dem Stiel (12) des Werkzeugs (1) mitdreht.

2. Handwerkzeug nach Anspruch 1, dadurch gekennzeichnet, dass das Distanzstück (5) Mitnahmenocken (53) aufweist, die von seinen beiden Frontseiten hinausragen und mit den Innengehäuse (41, 42) der Rolllager (4) im Eingriff sind.

3. Handwerkzeug nach Anspruch 1, dadurch gekennzeichnet, dass das Distanzstück (15) mit dem Stiel (12) des Fräsers koaxiale zylindrische Schulter (16) aufweist, die als Stützungsdflächen für die Innengehause der beiden Rolllager (17) ausgenutzt werden.

4. Handwerkzeug nach einem der Ansprüchen 1 bis 3, dadurch gekennzeichnet, dass die Rolllager (4) Kugellager sind, die mit Clips (10) mit Zwischenlagerung von elastischen Scheiben axial festgestellt sind.

5. Handwerkzeug nach einem der Ansprüchen 1 bis 4, dadurch gekennzeichnet, dass dass das Distanzstück (5 ; 15) zur Aufnahme einer Blockierungsschraube (6) ein Gewindeloch aufweist, die auf den Umfang des Stiels (12) des Fräsers (1) in Anschlag ist und dass das Lagerkörper (3 ; 19) für den Zugang zur Blockierungsschraube (6) des Distanzstück (5 ; 15) eine Oeffnung (7) aufweist.

6. Handwerkzeug nach Anspruch 1, dadurch gekennzeichnet, dass die Führungshülle (2) aus einer Kappe besteht, die auf den Lagerkorper (3 ; 19) lösbar befestigt ist und mit einem Ansatz (21) verlängert ist, der das Schnittteil (11) des Werkzeugs (1) umhüllt.

7. Handwerkzeug nach Anspruch 6, dadurch gekennzeichnet, dass der Ansatz (21) der Führungshülle (2) eine Oeffnung (22) aufweist, die mit um 45 ° zum Innere der Führungshülle (2) geneigten Stützungsflächen (23) versehen ist.

8. Handwerkzeug nach den Ansprüchen 1 und 6, dadurch gekennzeichnet, dass der Ansatz (21) zwei getrennten Oeffnungen (14) aufweist, die unterschiedliche Breiten aufweisen.

9. Handwerkzeug nach einem der Ansprüchen 1, 6, 7 oder 8, dadurch gekennzeichnet, dass die Form der Oeffnung(en) (22) eine progressive Breite aufweist.

10. Handwerkzeug nach einem der Ansprüchen 7 bis 9, dadurch gekennzeichnet, dass die Stützungsflächen (23) nach aussen mit einer Verbreiterung (122) verlängert sind.
